# EUROPÄISCHE PATENTSCHRIFT

(11) **EP 1 242 229 B1**
(45) Veröffentlichungstag und Bekanntmachung des Hinweises auf die Patenterteilung: **18.02.2004**
(21) Anmeldenummer: 00987193.0
(22) Anmeldetag: 30.11.2000
(51) Int. Cl.: B29C 53/84, B29C 53/02

(54) **VERFAHREN ZUM BERÜHRUNGSLOSEN BIEGEN VON TEILEN AUS EINEM THERMOPLASTISCHEN KUNSTSTOFF UND NACH DIESEM VERFAHREN GEBOGENES ODER JUSTIERTES TEIL**
METHOD FOR NON-CONTACTING BENDING OF COMPONENTS MADE OF A THERMOSPLASTIC PLASTIC AND A COMPONENT BENT OR ADJUSTED ACCORDING TO SAID METHOD
PROCEDE POUR PLIER SANS CONTACT DES PIECES CONSTITUEES D'UNE MATIERE SYNTHETIQUE THERMOPLASTIQUE, ET PIECE PLIEE OU AJUSTEE SELON LEDIT PROCEDE

(30) Priorität: 03.12.1999 DE 19958230
(43) Veröffentlichungstag der Anmeldung: 25.09.2002
(73) Patentinhaber: SIEMENS AKTIENGESELLSCHAFT, 80333 München (DE)
(72) Erfinder: LUPP, Friedrich, 81545 München (DE); HANEBUTH, Henning, 85622 Feldkirchen (DE); HAMANN, Christoph, Jefferson Ave., VA 12050 (US); SCHLENK, Wolfgang, 91058 Erlangen (DE)
(86) Internationale Anmeldenummer: PCT/DE2000/004265
(87) Internationale Veröffentlichungsnummer: WO 2001/039959

(56) Entgegenhaltungen:
- EP-B- 0 317 830
- DE-A- 2 918 100
- KLEIN R ET AL: "KUNSTSTOFFE MIT LASERSTRAHLEN BEARBEITEN" LASER PRAXIS,DE,CARL HANSER VERLAG, MUENCHEN, Nr. 2, 1. Oktober 1990 (1990-10-01), Seiten LS114-LS118, XP000171954 ISSN: 0937-7069
- PATENT ABSTRACTS OF JAPAN vol. 011, no. 356 (M-644), 20. November 1987 (1987-11-20) & JP 62 134117 A (MITSUBISHI ELECTRIC CORP), 17. Juni 1987 (1987-06-17)
- NONHOF C J: "LASER WELDING OF POLYMERS" POLYMER ENGINEERING & SCIENCE,US,SOCIETY OF PLASTICS ENGINEERS, Bd. 34, Nr. 20, 1. Oktober 1994 (1994-10-01), Seiten 1547-1549, XP000499675 ISSN: 0032-3888
- WILDMANN D ET AL: "LASERSENSIBEL PIGMENTIERTE KUNSTSTOFFE INDUSTRIELL BESCHRIFTEN" KUNSTSTOFFE,DE,CARL HANSER VERLAG. MUNCHEN, Bd. 79, Nr. 12, 1. Dezember 1989 (1989-12-01), Seiten 1307-1310, XP000160426 ISSN: 0023-5563

## Beschreibung

Aus der EP-B-0 317 830 ist ein Verfahren zum Biegen eines Gegenstandes aus Metall durch lokales Erhitzen und anschließendes Abkühlen des Gegenstandes bekannt. Dabei wird zum Biegen des plattenförmigen Gegenstandes ein Laserstrahl über die Oberfläche im gewünschten Biegebereich geführt. Bei diesem Vorgang wird die Laserstrahlleistung in der Oberfläche des Gegenstandes absorbiert und es bildet sich aufgrund der Wärmeleitfähigkeit des Metalls ein Temperaturgradient im Volumen des Gegenstandes aus. Bei genügend hoher Laserstrahlleistung wird somit der Gegenstand dem Gradienten entsprechend unterschiedlich stark aufgeschmolzen. Beim Aufschmelzen tritt eine Volumenvergrößerung auf und das schmelzflüssige Material wird nach oben verdrängt. Beim Erkalten tritt eine Volumenverkleinerung auf. Da das Material dann jedoch nicht mehr plastisch ist, werden durch die unterschiedlichen Schrumpfungen mechanische Kräfte induziert, die dazu führen, daß sich der plattenförmige Gegenstand zum Laserstrahl hin verbiegt.

Aus der DE-C-29 18 100 ist die Anwendung des vorstehend geschilderten Biegeverfahrens zum Justieren von feinwerktechnischen Teilen bekannt. Dabei wird beispielsweise zum Justieren einer Kontaktfeder ein Laserstrahl auf die Oberfläche der Kontaktfeder fokussiert, so daß im Fokus eine Schmelzzone entsteht, die nach dem Abkühlen eine Biegung der Kontaktfeder zum Laserstrahl hin bewirkt. Durch verschiedene Geometrien der aufgebrachten Schmelzzonen, z.B. überlappte Schmelzzonen, Schmelzzonen quer zur Feder, längs der Federränder oder beliebiger anderer Geometrien, können unterschiedlich starke Verformungen der Blattfeder hervorgerufen werden.

Versuche, ein derartiges Biegen oder Justieren von Teilen aus Metall auf Teile aus Kunststoff zu übertragen, sind bislang gescheitert, da die gängigen Kunststoffe entweder eine hohe optische Absorption aufweisen oder für Energiestrahlen transparent sind. Im letzteren Fall gibt es keinen Effekt, im ersten Fall wird die Energiestrahlleistung in die Oberfläche der Teile eingekoppelt. Da Kunststoff im Vergleich zu Metall eine um mehrere Größenordnungen geringere Temperaturleitzahl besitzt, kann sich im Kunststoff in kurzer Zeit kein zum Biegen notwendiger Temperaturgradient ausbilden. Die Temperaturleitzahl für Polypropylen beträgt beispielsweise 0,002 cm²/s, während die Temperaturleitzahl für Molybdän 0,48 cm²/s beträgt. Hinzu kommt, daß bei Kunststoffen der Unterschied zwischen Schmelzpunkt und Flammpunkt sehr gering ist, d.h. ein Energiestrahl bewirkt eine Verbrennung oder Zersetzung des Kunststoffes an der Oberfläche, bevor eine zum Biegen erforderliche Temperaturerhöhung in unteren Lagen auftritt.

Der in den Ansprüchen 1, 2 und 13 angegebenen Erfindung liegt das Problem zugrunde, ein Verfahren zum berührungslosen Biegen von Teilen aus Kunststoff durch lokales Aufschmelzen und anschließendes Abkühlen zu schaffen.

Der Erfindung liegt die Erkenntnis zugrunde, daß Teile aus einem thermoplastischen Kunststoff dann berührungslos gebogen werden können, wenn es gelingt, in Richtung eines Energiestrahls einen Temperatur- bzw. Schmelzvolumengradienten im Kunststoff auszubilden. In diesem Fall kann dann der Biegevorgang analog zum Mechanismus beim berührungslosen Biegen von Teilen aus Metall ablaufen. Dazu muß der optische Absorptionskoeffizient des eingesetzten Kunststoffes für die Wellenlänge des Energiestrahls so eingestellt werden, daß die Energiestrahlleistung nicht an der Oberfläche, sondern mit einem geeigneten Gradienten im Volumen absorbiert wird. Dann bildet sich trotz der geringen Temperaturleitfähigkeit auch ein Gradient bezüglich der Temperatur bzw. bezüglich des Schmelzvolumens aus und der Biegevorgang kann analog zum Biegen von Metallen ablaufen.

Gemäß Anspruch 1 erfolgt die Einstellung der optischen Absorptionsfähigkeit des Kunststoffes durch die Einstellung eines Transmissionsgrades zwischen 0,5 % und 20 % für die Wellenlänge der Energiestrahlung. Wird gemäß Anspruch 2 als zusätzlich die Biegung unterstützendes Maßnahme ein stark konvergierender Energiestrahl verwendet, dessen Fokuspunkt auf oder in der Nähe der dem Energiestrahl zugewandten Oberfläche der Teile liegt, so gelingt die Biegung auch bei einem Transmissionsgrad zwischen 0,5 % und 70 % für die Wellenlänge der Energiestrahlung.

Vorteilhafte Ausgestaltungen der Erfindung sind in den Ansprüchen 3 bis 12 angegeben.

Die zusätzliche Verwendung eines stark konvergierenden Energiestrahls bewirkt eine erhebliche Unterstützung des Biegevorgangs, wenn gemäß Anspruch 3 ein Energiestrahl verwendet wird, dessen Winkel in der Strahltaille größer als 20° ist. Normalerweise, wie etwa beim bekannten Biegen von Metallen, liegt der Winkel in der Strahltaille etwa bei 5°.

Die Weiterbildung nach Anspruch 4 gibt einen optimierten Bereich des Transmissionsgrades für das Verfahren nach Anspruch 1 an.

Die Ausgestaltung nach Anspruch 5 ermöglicht eine einfache und wirtschaftliche Einstellung des optischen Absorptionskoeffizienten bzw. des Transmissionsgrades durch die Zugabe von Additiven zum Kunststoff. Gemäß Anspruch 6 werden dabei als Additive vorzugsweise Farbstoffe und/oder Pigmente und/oder faserförmige Füllstoffe verwendet.

Die Ausgestaltung nach Anspruch 7 ermöglicht eine Auswahl von Kunststoffen mit thermoplastischen Eigenschaften, die für das berührungslose Biegen besonders gut geeignet sind.

Die Weiterbildung nach Anspruch 8 betrifft den Einsatz von Lasern, die sich beim berührungslosen Biegen oder Justieren von Teilen aus Metall bereits sehr gut bewährt haben. Dabei werden die im Anspruch 9 aufgeführten Laserarten, die im Infraroten oder im sichtbaren Bereich emittieren, bevorzugt. Im Falle von Lasern, die im Infraroten emittieren, können die erforderlichen optischen Absorptionseigenschaften durch die Zugabe von Farbstoffen und/oder Pigmenten als Additive so eingestellt werden, daß die Teile für das menschliche Auge vorggebbare Farbtöne oder Helligkeiten aufweisen. Selbst vollkommen schwarze Teile können dabei die für das Biegen erforderlichen optischen Absorptionseigenschaften aufweisen.

Anstelle von Lasern können gemäß Anspruch 10 auch weniger aufwendige Lampenstrahler, wie z.B. Xenonlampen, eingesetzt werden.

Die Weiterbildung nach Anspruch 11 ermöglicht ein exakt vorgebbares und reproduzierbares Biegen von Teilen aus Kunststoff. Die Erzeugung von zwei oder mehreren linienförmigen Schmelzbereichen gemäß Anspruch 12 ermöglicht dabei Biegungen der Teile mit größeren Biegewinkeln.

Ausführungsbeispiele der Erfindung sind in der Zeichnung dargestellt und werden im folgenden näher beschrieben.
Es zeigen:
- Figur 1: bis Figur 4 verschiedene Verfahrensstadien beim berührungslosen Biegen von Teilen aus Kunststoff mit Hilfe eines Energiestrahls,
- Figur 5: die Erzeugung eines Temperaturgradienten in einem Teil aus Kunststoff durch angepaßte optische Absorption eines Laserstrahls,
- Figur 6: die unterschiedlichen Schrumpfungen des gemäß Figur 5 aufgeschmolzenen Materials beim Abkühlen,
- Figur 7: die Erzeugung eines Temperaturgradienten in einem Teil aus Kunststoff durch angepaßte optische Absorption eines auf die Oberfläche des Teils fokussierten Laserstrahls und
- Figur 8: die Erzeugung von linienförmigen Schmelzspuren zum Biegen eines Teils aus Kunststoff.

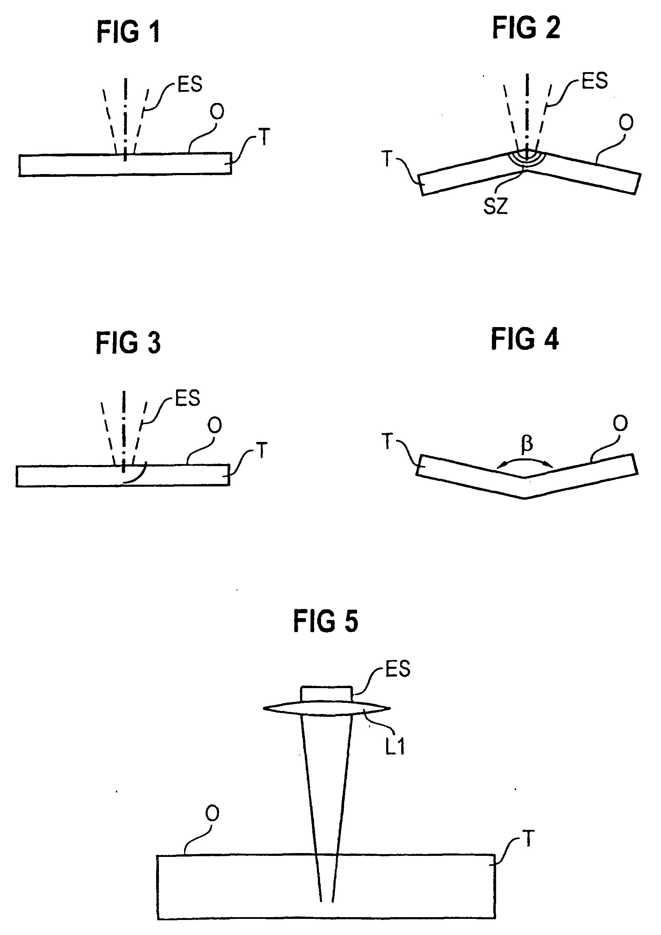

Die Figuren 1 bis 4 zeigen in stark vereinfachter schematischer Darstellung verschiedene Verfahrensstadien beim berührungslosen Biegen eines Teiles T aus thermoplastischem Kunststoff mit Hilfe eines Energiestrahls ES. Figur 1 zeigt dabei den Beginn des Biegeprozesses, bei welchem der Energiestrahl ES im gewünschten Biegebereich auf die Oberfläche O des Teils O gerichtet wird. Figur 2 zeigt die Erwärmungsphase, bei welcher in Richtung des Energiestrahls ES durch angepaßte optische Absorption des Kunststoffes sich in dem Teil T ein Temperatur- bzw. Schmelzvolumengradient ausbildet. Hierdurch wird der Kunststoff dem Gradienten entsprechend unterschiedlich stark aufgeschmolzen, wobei die Schmelzzone in Figur 2 mit SZ bezeichnet ist. Beim Aufschmelzen tritt eine Volumenvergrößerung auf, durch welche der schmelzflüssige Kunststoff nach oben verdrängt wird und das Teil sich gemäß Figur 2 zunächst vom Energiestrahl ES weg verbiegt. Mit zunehmender Schmelzflüssigkeit in der Schmelzzone SZ ergibt sich dann gemäß Figur 3 vorübergehend wieder eine gerade Ausrichtung des Teils T. Beim anschließenden Erkalten des aufgeschmolzenen Kunststoffes tritt eine Volumenverkleinerung auf. Da der Kunststoff dann jedoch nicht mehr plastisch ist, werden durch die unterschiedlichen Schrumpfungen mechanische Kräfte induziert, die dazu führen, daß sich das Teil T gemäß Figur 4 zum Energiestrahl ES hin verbiegt. Der entsprechende Biegewinkel ist mit β bezeichnet.

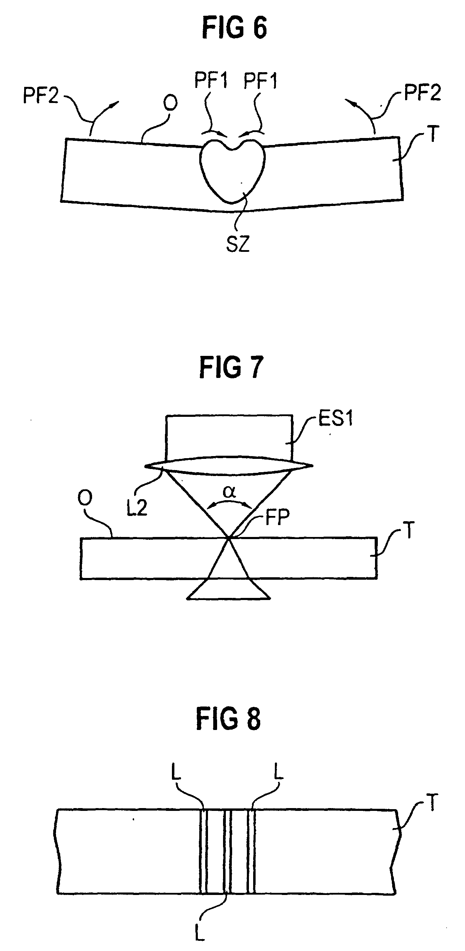

Figur 5 zeigt in stark vereinfachter schematischer Darstellung die Erzeugung eines Temperaturgradienten in einem Teil T aus Kunststoff. Hierbei wird ein wieder mit ES bezeichneter Energiestrahl, bei welchem es sich um einen Laserstrahl handelt, über eine Linse L1 auf die Oberfläche O des Teils T gerichtet. Der thermoplastische Kunststoff des Teils T ist dabei durch Zusätze, wie z.B. Farbstoffe und/oder Pigmente und/oder faserförmige Füllstoffe, wie Glasfasern, so eingestellt, daß er für die Wellenlänge der Energiestrahlung ES einen Transmissionsgrad zwischen 0,5 % und 20 %, vorzugsweise zwischen 2 % und 7 % aufweist. Hierdurch wird der Energiestrahl ES in dem Material des Teils T so absorbiert, daß der zum Biegen erforderliche Temperaturgradient bzw. der Gradient des Schmelzvolumens erzeugt wird. Das Material wird dabei in der in Figur 6 durch die Schmelzzone SZ aufgezeigte Form aufgeschmolzen und nach oben verdrängt, wobei zwei langgestreckte Wulste an der Oberfläche O entstehen. Beim Erkalten werden durch die Pfeile PF1 angedeutete Schrumpfspannungen erzeugt, die ihrerseits dazu führen, daß sich das Teil T in Richtung der Pfeile PF2 verbiegt.

Bei der in Figur 7 dargestellten Alternative wird ein Energiestrahl ES 1, bei welchem es sich wieder um einen Laserstrahl handelt, über eine Linse L2 auf die Oberfläche O eines Teils T aus thermoplastischem Kunststoff gerichtet, wobei der Fokuspunkt FP des stark konvergierenden Energiestrahls ES1 auf der Oberfläche O des Teils T liegt. Durch den stark konvergenten Energiestrahl ES1 wird das Temperaturgefälle mit der höchsten Temperatur an der Oberfläche O begünstigt und damit auch die Ausbildung eines Gradienten bezüglich des Schmelzvolumens. Der in Figur 6 dargestellte Biegeeffekt kann hier bei einem Transmissionsgrad des Kunststoffs zwischen 0,5 % und 70 % für die Wellenlänge der Energiestrahlung ES1 erreicht werden. Der mit α bezeichnete Winkel in der Strahltaille des Energiestrahls ES1 sollte dabei größer als 20° sein und beispielsweise 30° betragen. Der Fokuspunkt FP muß nicht unbedingt auf der Oberfläche O liegen, er darf auch in der Nähe der Oberfläche O liegen, wobei die Abweichung in beiden Richtungen jedoch nicht mehr als 20 % der Dicke des Teils T betragen sollte.

Figur 8 zeigt eine Draufsicht auf ein Teil T mit insgesamt drei im Abstand zueinander in Querrichtung verlaufenden Linien L. Bei diesen Linien L handelt es sich um durch den Energiestrahl ES (vgl. Figuren 1 bis 5) oder ES1 (vgl. Figur 7) erzeugte linienförmige Schmelzbereiche, die beispielsweise 700 µm breit sind und zwischen sich einen Abstand von 1 mm bis 2 mm aufweisen. Jede dieser Linien L bewirkt beispielsweise eine Biegung von 1°, so daß der aufsummierte Biegewinkel β (vgl. Figur 4) in diesem Fall 3° beträgt.

### Beispiel 1:

Ein 2 mm dickes plattenförmiges Teil aus Polypropylen weist einen Massenanteil von 0,01 % Kohlenstoff auf. Durch diese Beimischung wurde die optische Transmission durch das Teil auf etwa 4 % bei der Wellenlänge eines Diodenlasers von 940 nm eingestellt. Bei einer Scan-Geschwindigkeit von 30 mm/s, einem Fokus-Durchmesser des Laserstrahls von 1 mm und einer Laserleistung von 17 W wurde in einer der Figur 8 entsprechenden Linie L eine Aufschmelzspur erzeugt. Hierdurch ergab sich ein Biegewinkel β (vgl. Figur 4) von ca. 1°. Bei drei Linien L entsprechend Figur 8 ergibt sich ein Biegewinkel β von ca. 3°.

### Beispiel 2:

In Abwandlung des Beispiels 1 wurde ein Diodenlaser mit einer Wellenlänge von 808 nm, einer Scan-Geschwindigkeit von 40 mm/s, einem Fokus-Durchmesser des Laserstrahls von 1 mm und einer Laserleistung von 20 W eingesetzt. Es ergaben sich mit dem Beispiel 1 vergleichbare Biegewinkel.

### Beispiel 3:

Ein 2 mm dickes plattenförmiges Teil aus Polypropylen weist einen Massenanteil von 0,025 % Kohlenstoff auf. Durch diese Beimischung wurde die optische Transmission durch das Teil auf etwa 0,5 % bei der Wellenlänge eines Diodenlasers von 940 nm eingestellt. Bei einer Scan-Geschwindigkeit von 30 mm/s, einem Fokus-Durchmesser des Laserstrahls von 1 mm und einer Laserleistung von 10 W wurde in einer der Figur 8 entsprechenden Linie L eine Aufschmelzspur erzeugt. Hierdurch ergab sich ein Biegewinkel β (vgl. Figur 4) von ca. 3/10°. Bei drei Linien L entsprechend Figur 8 ergibt sich ein Biegewinkel β von ca. 0,9°.

Das vorstehend anhand der Figuren 1 bis 8 und der Beispiele 1 bis 3 erläuterte Verfahren zum berührungslosen Biegen von Teilen aus einem Kunststoff mit thermoplastischen Eigenschaften kann beispielsweise zum Justieren von Relais-Federn aus Kunststoff, zum Justieren von Videoköpfen oder zum Justieren von Lichtwellenleitern in Bezug auf Linsen oder Dioden eingesetzt werden.

## Patentansprüche

1. Verfahren zum berühungslosen Biegen von Teilen (T) aus einem Kunststoff mit thermoplastischen Eigenschaften durch lokales Aufschmelzen mit Hilfe eines Energiestrahls (ES) und anschließendes Abkühlen, wobei der einen Transmissionsgrad zwischen 0,5 % und 20 % für die Wellenlänge der Energiestrahlung (ES) aufweisende Kunststoff durch Absorptionswärme derart lokal aufgeschmolzen wird, daß sich die Teile (T) beim Abkühlen zum Energiestrahl (ES) hin verbiegen.

2. Verfahren zum berührungslosen Biegen von Teilen (T) aus einem Kunststoff mit thermoplastischen Eigenschaften durch lokales Aufschmelzen mit Hilfe eines Energiestrahls (ES1) und anschließendes Abkühlen, wobei ein stark konvergierender Energiestrahl (ES1) verwendet wird, dessen Fokuspunkt (FP) auf oder in der Nähe der dem Energiestrahl (ES1) zugewandten Oberfläche (O) der Teile (T) liegt, und wobei der einen Transmissionsgrad zwischen 0,5 % und 70 % für die Wellenlänge der Energiestrahlung (ES1) aufweisende Kunststoff durch Absorptionswärme derart lokal aufgeschmolzen wird, daß sich die Teile (T) beim Abkühlen zum Energiestrahl (ES1) hin verbiegen.

3. Verfahren nach Anspruch 2, **dadurch gekennzeichnet, daß** ein Energiestrahl (ES1) verwendet wird, dessen Winkel (α) in der Strahltaille größer als 20° ist.

4. Verfahren nach Anspruch 1, **dadurch gekennzeichnet, daß** ein Kunststoff verwendet wird, der einen Transmissionsgrad zwischen 2 % und 7 % für die Wellenlänge der Energiestrahlung (ES) aufweist.

5. Verfahren nach einem der Ansprüche 1 bis 4, **dadurch gekennzeichnet, daß** der Transmissionsgrad des Kunststoffes für die Wellenlänge der Energiestrahlung (ES; ES1) durch die Zugabe von die Energiestrahlung absorbierenden Additiven zum Kunststoff eingestellt wird.

6. Verfahren nach Anspruch 5, **dadurch gekennzeichnet, daß** als Additive Farbstoffe und/oder Pigmente und/oder faserförmige Füllstoffe verwendet werden.

7. Verfahren nach einem der vorhergehenden Ansprüche, **dadurch gekennzeichnet, daß** Teile (T) aus PP, PS, SAN, ABS, PVC, PA, PMMA, PC oder PAN verwendet werden.

8. Verfahren nach einem der vorhergehenden Ansprüche, **dadurch gekennzeichnet, daß** zur Erzeugung des Energiestrahls (ES; ES1) ein Laser verwendet wird.

9. Verfahren nach Anspruch 8, **dadurch gekennzeichnet, daß** zur Erzeugung des Energiestrahls (ES; ES1) ein Diodenlaser, ein Nd:YAG-Laser, ein Seltene-Erden-Laser, ein Argonionenlaser, ein Kryptonionenlaser oder ein Helium-Neon-Laser verwendet wird.

10. Verfahren nach einem der Ansprüche 1 bis 7, **dadurch gekennzeichnet, daß** zur Erzeugung des Energiestrahls (ES; ES1) ein Lampenstrahler verwendet wird.

11. Verfahren nach einem der vorhergehenden Ansprüche, **dadurch gekennzeichnet, daß** der Energiestrahl (ES; ES1) entlang einer Linie (L) über den Biegebereich der Teile geführt wird.

12. Verfahren nach einem der Ansprüche 1 bis 10, **dadurch gekennzeichnet, daß** der Energiestrahl (ES; ES1) entlang von zwei oder mehreren, im Abstand zueinander verlaufenden Linien (L) über den Biegebereich der Teile geführt wird.

13. Teil (T) aus einem Kunststoff mit thermoplastischen Eigenschaften, **dadurch gekennzeichnet, daß** es nach einem der Ansprüche 1 bis 12 gebogen oder justiert ist.

## Claims

1. Method for the contactless bending of parts (T) made from a plastic with thermoplastic properties by local melting with the aid of an energy beam (ES) followed by cooling, the plastic, which has a transmittance of between 0.5% and 20% for the wavelength of the energy radiation (ES), is locally melted by absorption heat in such a manner that the parts (T) bend towards the energy beam (ES) as they cool.

2. Method for the contactless bending of parts (T) made from a plastic with thermoplastic properties by local melting with the aid of an energy beam (ES1) and subsequent cooling, in which a strongly convergent energy beam (ES1) is used, the focal point (FP) of which lies on or in the vicinity of that surface (O) of the parts (T) which faces the energy beam (ES1), and in which the plastic, which has a transmittance of between 0.5% and 70% for the wavelength of the energy radiation (ES1), is locally melted by absorption heat in such a manner that the parts (T) bend towards the energy beam (ES1) as they cool.

3. Method according to Claim 2, **characterized in that** an energy beam (ES1) whose angle (α) in the beam width is greater than 20° is used.

4. Method according to Claim 1, **characterized in that** a plastic which has a transmittance of between 2% and 7% for the wavelength of the energy radiation (ES) is used.

5. Method according to one of Claim 1 to 4, **characterized in that** the transmittance of the plastic for the wavelength of the energy radiation (ES; ES1) is set by the addition of additives which absorb the energy radiation to the plastic.

6. Method according to Claim 6, **characterized in that** dyes and/or pigments and/or fibrous fillers are used as additives.

7. Method according to one of the preceding claims, **characterized in that** parts (T) made from PP, PS, SAN, ABS, PVC, PA, PMMA, PC or PAN are used.

8. Method according to one of the preceding claims, **characterized in that** a laser is used to generate the energy beam (ES; ES1).

9. Method according to Claim 8, **characterized in that** a diode laser, a Nd:YAG laser, a rare earth laser, an argon ion laser, a krypton ion laser or a helium-neon laser is used to generate the energy beam (ES; ES1).

10. Method according to one of Claims 1 to 7, **characterized in that** a lamp radiator is used to generate the energy beam (ES; ES1).

11. Method according to one of the preceding claims, **characterized in that** the energy beam (ES; ES1) is guided along a line (L) over the bending region of the parts.

12. Method according to one of Claims 1 to 10, **characterized in that** the energy beam (ES; ES1) is guided along two or more lines (L), which run at a distance from one another, over the bending region of the parts.

13. Part (T) made from a plastic with thermoplastic properties, **characterized in that** it is bent or adjusted as described in one of Claims 1 to 12.

## Revendications

1. Procédé pour plier sans contact des pièces (T) constituées d'une matière synthétique ayant des propriétés thermoplastiques par fusion locale à l'aide d'un rayon énergétique (ES) puis refroidissement, dans lequel la matière synthétique présentant un taux de transmission de la longueur d'onde du rayonnement énergétique (ES) compris entre 0,5 % et 20 % est fondue localement par chaleur d'absorption de telle sorte que les pièces (T) se plient vers le rayon énergétique (ES) durant le refroidissement.

2. Procédé pour plier sans contact des pièces (T) constituées d'une matière synthétique ayant des propriétés thermoplastiques par fusion locale à l'aide d'un rayon énergétique (ES1) puis refroidissement, dans lequel on utilise un rayon énergétique (ES1) fortement convergent dont le point focal (FP) est situé sur ou à proximité de la surface (O) tournée vers le rayon énergétique (ES1) des pièces (T) et dans lequel la matière synthétique présentant un taux de transmission de la longueur d'onde du rayonnement énergétique (ES1) compris entre 0,5 % et 70 % est fondue localement par chaleur d'absorption de telle sorte que les pièces (T) se plient vers le rayon énergétique (ES1) durant le refroidissement.

3. Procédé selon la revendication 2, **caractérisé en ce qu'**on utilise un rayon énergétique (ES1) dont l'angle (α) à la taille du rayon est supérieur à 20°.

4. Procédé selon la revendication 1, **caractérisé en ce qu'**on utilise une matière synthétique présentant un taux de transmission de la longueur d'onde du rayonnement énergétique (ES) compris entre 2 % et 7 %.

5. Procédé selon l'une des revendications 1 à 4, **caractérisé en ce qu'**on règle le taux de transmission de la longueur d'onde du rayonnement énergétique (ES ; ES1) de la matière synthétique en ajoutant à la matière synthétique des additifs absorbant le rayonnement énergétique.

6. Procédé selon la revendication 5, **caractérisé en ce qu'**on utilise comme additifs des colorants et/ou des pigments et/ou des charges fibreuses.

7. Procédé selon l'une des revendications précédentes, **caractérisé en ce qu'**on utilise des pièces (T) en PP, PS, SAN, ABS, PVC, PA, PMMA, PC ou PAN.

8. Procédé selon l'une des revendications précédentes, **caractérisé en ce qu'**on utilise un laser pour produire le rayon énergétique (ES ; ES1).

9. Procédé selon la revendication 8, **caractérisé en ce qu'**on utilise un laser à diodes, un laser Nd:YAG, un laser à base de terres rares, un laser à argon ionisé, un laser à krypton ionisé ou un laser au néon-hélium pour produire le rayon énergétique (ES ; ES1).

10. Procédé selon l'une des revendications 1 à 7, **caractérisé en ce qu'**on utilise un spot lumineux pour produire le rayon énergétique (ES ; ES1).

11. Procédé selon l'une des revendications précédentes, **caractérisé en ce qu'**on guide le rayon énergétique (ES ; ES1) sur la zone de pliage des pièces le long d'une ligne (L).

12. Procédé selon l'une des revendications 1 à 10, **caractérisé en ce qu'**on guide le rayon énergétique (ES ; ES1) sur la zone de pliage des pièces le long de deux ou de plusieurs lignes (L) s'étendant à distance l'une de l'autre.

13. Pièce (T) constituée d'une matière synthétique ayant des propriétés thermoplastiques, **caractérisée en ce qu'**elle est pliée ou ajustée selon l'une des revendications 1 à 12.
